# EUROPÄISCHE PATENTANMELDUNG

(11) **EP 0 696 749 A1**
(43) Veröffentlichungstag der Anmeldung: **14.02.1996**
(21) Anmeldenummer: 95111958.5
(22) Anmeldetag: 29.07.1995
(51) Int. Cl.: G02B 6/44

(54) **Vorrichtung zum knickfreien Umlenken von Lichtwellenleitern**

(30) Priorität: 10.08.1994 DE 9412895 U
(71) Anmelder: KE KOMMUNIKATIONS-ELEKTRONIK GMBH & CO, D-30179 Hannover (DE)
(72) Erfinder: Gerwald, Eberhard, D-31180 Giesen (DE); Timmermann, Andreas, D-30952 Ronnenberg (DE)
(74) Vertreter: Döring, Roger

(57) **Zusammenfassung**

Es wird eine Vorrichtung zum knickfreien Umlenken von Lichtwellenleitern angegeben, die einen aus zwei etwa quaderförmigen, relativ zueinander zwangsgeführten Schiene (11) Blöcken (9,10) bestehenden Umlenkkörper aufweist. In jedem der beiden Blöcke ist mindestens eine nutförmig ausgebildete, in einem Bogen von etwa 90° verlaufende Führungsbahn (12,13,17,18) zur Aufnahme der Lichtwellenleiter angebracht. Die Führungsbahn ist jeweils an ihren beiden in unterschiedlichen Begrenzungsflächen der Blöcke liegenden Enden offen. Die Führungsbahn des einen Blocks schließt bei aneinander liegenden Blöcken an die Führungsbahn des anderen Blocks an. Die Ebenen der Führungsbahnen der beiden Blöcke sind rechtwinklig zueinander angeordnet.

## Beschreibung

Lichtwellenleiter - im folgenden kurz "LWL" genannt - werden zur Übertragung optischer Signale in der Fernmeldetechnik eingesetzt. Sie sind mechanisch empfindliche Gebilde und müssen daher bei der Herstellung von optischen Kabeln, aber auch bei ihrem Anschluß an Geräte sorgfältig behandelt werden. Dabei ist besonders darauf zu achten, daß die LWL nicht um zu kleine Radien gebogen werden, da sie sonst abknicken.

Während die LWL in den Kabeln geschützt untergebracht sind, liegen sie an Anschlußstellen, an denen sie mit Geräten der Fernmeldetechnik verbunden werden sollen, über relativ große Längen ohne besonderen Schutz frei. Das gilt beispielweise für Gestelle der Fernmeldetechnik mit Baugruppenträgern bzw. Einschüben, in welche ein LWL-Kabel bis zu einem Aufteilungspunkt eingeführt ist, von dem dünnere LWL-Kabel bzw. einzelne LWL zu den Baugruppenträgern und Einschüben weiterführen. An jeden im Gestell befindlichen Baugruppenträger bzw. Einschub müssen beispielsweise zwei aus dem Gestell kommende LWL angeschlossen werden. Dabei müssen die LWL so einwandfrei geführt werden, daß sie nicht geknickt werden können.

Der Erfindung liegt die Aufgabe zugrunde, eine Vorrichtung anzugeben, die es gestattet, LWL auf einfache Weise und ohne Knickgefahr zu führen und umzulenken.

Diese Aufgabe wird gemäß der Erfindung durch einen aus zwei etwa quaderförmigen, relativ zueinander zwangsgeführten Blöcken bestehenden Umlenkkörper gelöst, bei welchem in jedem der beiden Blöcke mindestens eine nutförmig ausgebildete, in einem Bogen von etwa 90° verlaufende Führungsbahn zur Aufnahme der Lichtwellenleiter angebracht ist, die jeweils an ihren beiden in unterschiedlichen Begrenzungsflächen der Blöcke liegenden Enden offen ist, bei welchem die Führungsbahn des einen Blocks bei aneinander liegenden Blöcken an die Führungsbahn des anderen Blocks anschließt und bei welchem die Ebenen der Führungsbahnen der beiden Blöcke rechtwinklig zueinander angeordnet sind.

Mittels des Umkenkkörpers dieser Vorrichtung können LWL einwandfrei geführt in zwei rechtwinklig zueinander verlaufenden Ebenen beispielweise jeweils um 90° gebogen werden. Die LWL liegen in den nutförmigen Führungsbahnen der Blöcke so geschützt, daß sie nicht geknickt werden können. Die beiden Blöcke sind zwangsgeführt miteinander verbunden, so daß die Stellen der Umlenkung der LWL auch einen größeren Abstand voneinander haben können, bei entsprechendem Abstand der beiden Blöcke voneinander. Dabei ist es sinnvoll, den einen Block an einer Kante im Bereich der Frontseite eines Baugruppenträgers oder Einschubs fest anzubringen, wenn von oben kommende LWL beispielweise in Steckbuchsen eingesteckt werden sollen, die sich an der Frontseite des entsprechenden Geräts befinden. Der andere Block wird zweckmäßig auf der Deckplatte eines Baugruppenträgers oder Einschubs angebracht, da die LWL in der Regel von der Seite her aus dem Gestell kommend zugeführt werden. Wenn mehrere Einschübe nebeneinander in einem Baugruppenträger angeordnet sind, können die auf der Deckplatte angebrachten Blöcke jeweils in unterschiedlichen Abständen zu den anderen Blöcken angeordnet werden. Es ist dadurch auf einfache Weise sichergestellt, daß die zu den unterschiedlichen Einschüben führenden LWL sich nicht gegenseitig behindern.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 in schematischer Darstellung ein Gestell der Nachrichtentechnik.
Fig. 2 eine Draufsicht auf einen Baugruppenträger in vergrößerter Darstellung.
Fig. 3 eine Frontansicht eines Einschubs in nochmals vergrößerter Darstellung.
Fig. 4 eine Draufsicht auf die Vorrichtung nach der Erfindung in weiter vergrößerter Darstellung.
Fig. 5 eine Seitenansicht der Vorrichtung nach Fig. 4
Fig. 6 und 7 die beiden Blöcke der Vorrichtung in perspektivischer Darstellung.
Fig. 8 einen Schnitt durch Fig. 7 längs der Linie VIII - VIII in vergrößerter Darstellung.

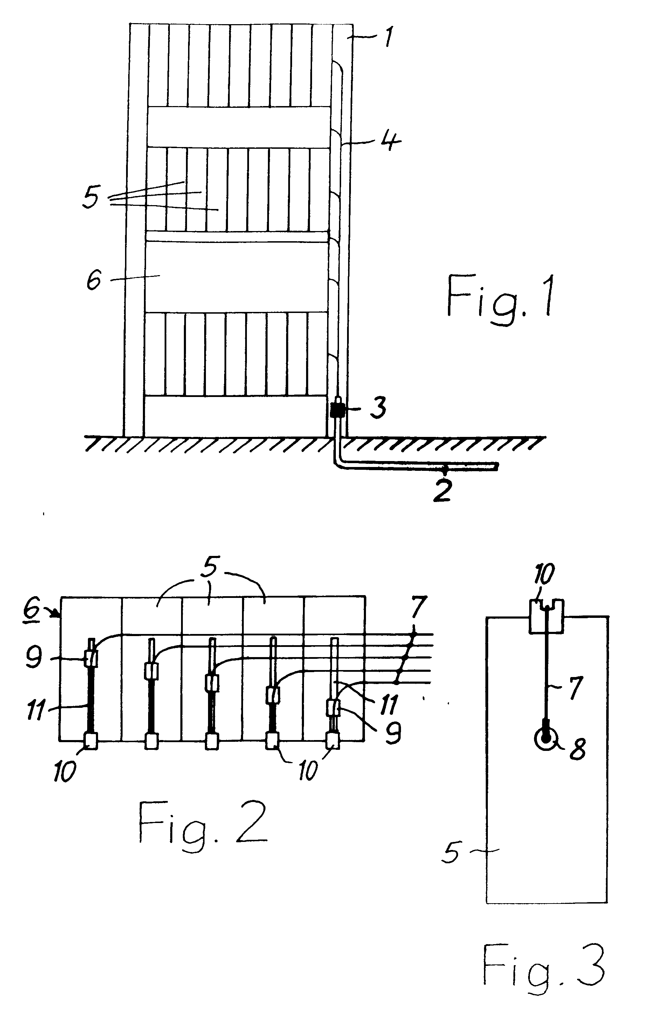

In dem aus Fig. 1 ersichtlichen, in 19''-Technik aufgebauten Gestell 1 sind mehrere Einschübe bzw. Baugruppenträger mit Einschüben in unterschiedlicher Größe enthalten. In das Gestell 1 ist ein LWL-Kabel 2 eingeführt, das an der Stelle 3 abgefangen ist. Von der Stelle 3 gehen mehrere kleinere LWL-Kabel 4 aus, von denen jedes in einen Einschub 5 bzw. in einen Baugruppenträger 6 geführt ist. Jeder aus dem Gestell 1 herausziehbaren und wieder in dasselbe einschiebbaren Einheit wird mindestens ein LWL 7 zugeführt. Es können aber auch zwei oder mehr LWL 7 gleichzeitig zugeführt werden. Die Vorrichtung nach der Erfindung ist beispielsweise für die gleichzeitige Führung von vier LWL 7 geeignet. Sie wird beispielweise für einen mit fünf Einschüben 5 bestückten Baugruppenträger 6 wie im folgenden beschrieben gehandhabt. Dabei wird zunächst davon ausgegangen, daß den Einschüben 5 jeweils nur ein LWL 7 zugeführt wird.

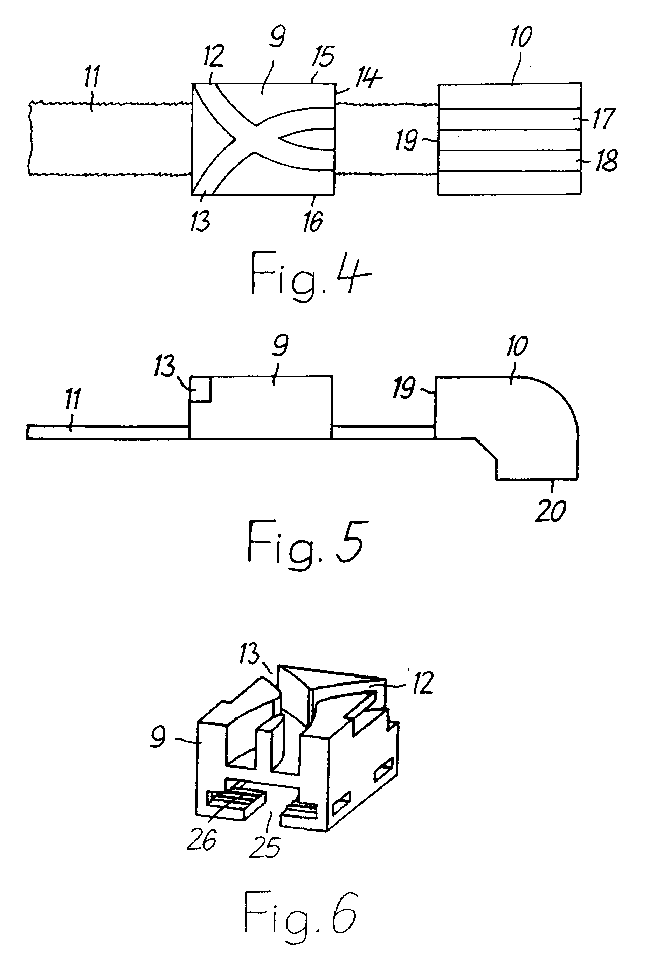

Aus dem Gestell 1 wird für jeden Einschub 5 ein LWL 7 herausgezogen und beispielweise an der Frontseite des Einschubs 5 mittels eines Steckerstifts in eine Steckbuchse 8 gesteckt. Die LWL 7 werden dazu zunächst in erste Blöcke 9 eines Umlenkkörpers eingelegt, deren genauerer Aufbau aus den Fig. 4 bis 8 hervorgeht. Dadurch werden sie ohne Knickgefahr etwa um 90° umgelenkt. Von den ersten Blöcken 9 werden die LWL 7 zu zweiten Blöcken 10 des Umlenkkörpers geführt, in denen sie in einer Ebene nochmals etwa um 90° umgelenkt werden, die rechtwinklig zur Ebene der ersten Blöcke 9 verläuft. Die LWL 7 liegen dann an den Frontseiten der Einschübe 5. Sie können mittels an ihren Enden angebrachter Steckerstifte in die Steckbuchsen 8 eingesteckt werden.

Die beiden etwa quaderförmigen Blöcke 9 und 10 sind zu einem aus den Fig. 4 und 5 ersichtlichen Umlenkkörper zusammengefaßt und in demselben relativ zueinander zwangsgeführt. Dazu ist an dem zweiten Block 10 eine Rastschiene 11 befestigt, auf welcher der erste Block 9 verschiebbar ist. Das hat den Vorteil, daß die ersten Blöcke 9 der für die fünf Einschübe 5 verwendeten Umlenkkörper gemäß Fig. 2 in unterschiedlichen Entfernungen zu den zweiten Blöcken 10 angeordnet werden können. Die einzelnen LWL 7 können den ersten Blöcken 9 dadurch in unterschiedlicher Höhe zugeführt werden, so daß sie sich gegenseitig nicht behindern. Die LWL 7 müssen dadurch insbesondere nicht miteinander gekreuzt werden.

Die Blöcke 9 und 10 weisen jeder mindestens eine nutförmige Führungsbahn auf, in welche die LWL 7 eingelegt und dadurch knickfrei umgelenkt werden können. Im in den Zeichnungen dargestellten Ausführungsbeispiel haben die beiden Blöcke 9 und 10 jeder zwei Führungsbahnen. Der Aufbau der Blöcke 9 und 10 wird im folgenden für jeweils einen Block erläutert:
Die beiden Führungsbahnen 12 und 13 des ersten Blocks 9 verlaufen gebogen, und zwar mit entgegengesetztem Verlauf. Sie durchlaufen im ersten Block 9 einen Winkel von etwa 90°. Die beiden Führungsbahnen 12 und 13 sind so angeordnet, daß jeweils eine von ihnen einen von einer der beiden unterschiedlichen Seiten des Gestells 1 her kommenden LWL 7 aufnehmen kann. Im dargestellten Ausführungsbeispiel kreuzen die Führungsbahnen 12 und 13 einander. Bei einem entsprechend breiten Block 9 könnten sie auch kreuzungsfrei in demselben angebracht werden. Die Führungsbahnen 12 und 13 münden einerseits mit etwa parallelem Verlauf in der Stirnfläche 14 des ersten Blocks 9. Die anderen Enden der Führungsbahnen 12 und 13 weisen bei entgegengesetzt gebogenem Verlauf voneinander weg und münden im dargestellten Ausführungsbeispiel an zwei einander gegenüber liegenden Seitenflächen 15 und 16 des ersten Blocks 9.

Der zweite Block 10 hat zwei parallel zueinander verlaufende Führungsbahnen 17 und 18, die in einer Stirnseite 19 einerseits und in einer rechtwinklig zu derselben verlaufenden Unterseite 20 andererseits münden. Die beiden Blöcke 9 und 10 sind durch die Rastschiene 11 so zwangsgeführt, daß ihre Führungsbahnen 12 und 13 sowie 17 und 18 in gleicher Höhe liegen. Wenn beide Blöcke 9 und 10 direkt aneinander liegen, ergibt sich dadurch ein absatzfreier Übergang vom Block 9 zum Block 10.

Die Rastschiene 11 kann gemäß Fig. 8 als Schwinge ausgeführt und schwach gebogen sein. Sie weist einen zur Anlage an einer Unterlage bestimmten Mittelteil 21 auf, von dem zwei Flügel 22 und 23 seitlich abstehen. An der Unterseite der Flügel 22 und 23 ist auf der ganzen Länge der Rastschiene 11 eine aus Rippen 24 bestehende Rasterung angebracht.

Der erste Block 9 hat gemäß Fig. 6 in seinem unteren Bereich einen etwa U-förmigen Durchbruch 25, der zur Aufnahme der Rastschiene 11 dient. An den in Montageposition die Rastschiene 11 umgreifenden Teilen des Durchbruchs 25 sind Rippen 26 angebracht, die in die Zwischenräume zwischen den Rippen 24 der Rastschiene 11 hineinragen. Zur Lösung der Rasterung wird von oben auf den ersten Block 9 gedrückt. Dabei werden die Flügel 22 und 23 der Rastschiene 11 verbogen und die Rippen 24 und 26 kommen voneinander frei. Der Block 9 kann dann auf der Rastschiene 11 bis zu einer neuen Raststellung verschoben werden.

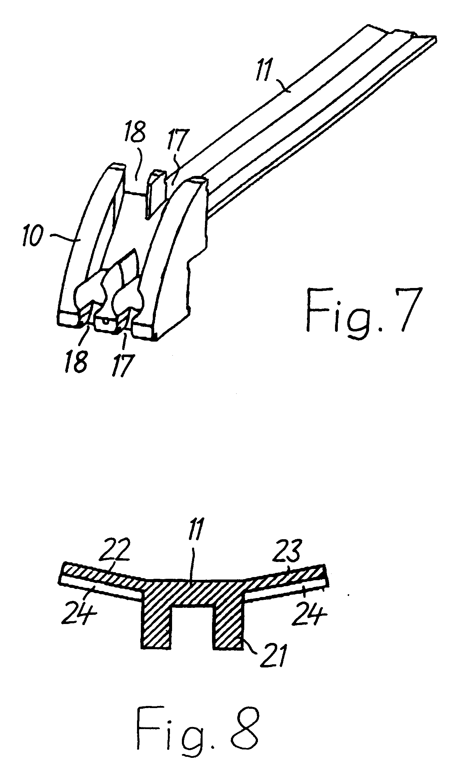

Die Führungsbahnen 17 und 18 des zweiten Blocks 10 können gemäß Fig. 7 in ihrem Verlauf unterbrochen sein, mit kontinuierlichem Übergang von einer Führungsbahn zur anderen. Das ist sinnvoll, wenn gleichzeitig zwei oder mehr LWL 7 umgelenkt werden sollen. So können beispielsweise zwei von der Führungsbahn 12 des ersten Blocks 9 kommende LWL 7 zunächst in die Führungsbahn 18 des zweiten Blocks 10 eingelegt werden. Sie werden dann innerhalb des zweiten Blocks 10 getrennt, so daß sie an dessen Unterseite 20 getrennt voneinander aus den Führungsbahnen 17 und 18 austreten. Die beiden LWL 7 werden dann in zwei Steckbuchsen 8 an der Frontseite des Einschubs 5 eingesteckt. Diese Aufteilung gilt analog auch dann, wenn mehr als zwei LWL 7 gleichzeitig umgelenkt werden sollen.

Die geschilderte und in den Fig. 2 und 3 dargestellte Führung der LWL 7 bis zu den Steckbuchsen 8 hat noch den Vorteil, daß eine Verriegelung der Einschübe 5 durch die in die Steckbuchsen 8 eingesteckten LWL 7 abgedeckt werden kann. Die Verriegelung eines Einschubs 5 kann dadurch erst dann gelöst werden, wenn der entsprechende LWL 7 aus der Steckbuchse 8 herausgezogen ist. Die Gefahr, daß ein LWL 7 beim Herausziehen eines Einschubs 5 aus dem Baugruppenträger 6 versehentlich abgerissen wird, ist dadurch gebannt.

## Patentansprüche

1. Vorrichtung zum knickfreien Umlenken von Lichtwellenleitern, gekennzeichnet durch einen aus zwei etwa quaderförmigen, relativ zueinander zwangsgeführten Blöcken (9,10) bestehenden Umlenkkörper, bei welchem in jedem der beiden Blöcke (9,10) mindestens eine nutförmig ausgebildete, in einem Bogen von etwa 90° verlaufende Führungsbahn (12,13,17,18) zur Aufnahme der Lichtwellenleiter (7) angebracht ist, die jeweils an ihren beiden in unterschiedlichen Begrenzungsflächen der Blöcke (9,10) liegenden Enden offen ist, bei welchem die Führungsbahn (12,13) des einen Blocks (9) bei aneinander liegenden Blöcken (9,10) an die Führungsbahn (17,18) des anderen Blocks (10) anschließt und bei welchem die Ebenen der Führungsbahnen (12,13,17,18) der beiden Blöcke (9,10) rechtwinklig zueinander angeordnet sind.

2. Vorrichtung nach Anspruch 1, dadurch gekennzeichnet,
- daß der erste Block (9) zwei in entgegengesetzter Richtung gebogene Führungsbahnen (12,13) hat, deren offene Enden einerseits etwa parallel zueinander verlaufend, nebeneinander in der gleichen Stirnfläche (14) des ersten Blocks (9) liegen, während die anderen offenen Enden der beiden Führungsbahnen (12,13) sich voneinander weg weisend in unterschiedlichen Seitenflächen (15,16) des ersten Blocks (9) befinden und
- daß der zweite Block (10) zwei parallel zueinander verlaufende Führungsbahnen (17,18) aufweist.

3. Vorrichtung nach Anspruch 1 oder 2, dadurch gekennzeichnet, daß die Führungsbahnen (17,18) des zweiten Blocks (10) in ihrem Verlauf innerhalb desselben mit kontinuierlichem Übergang ineinander übergehen.

4. Vorrichtung nach einem der Ansprüche 1 bis 3, dadurch gekennzeichnet, daß an dem zweiten Block (10) eine Rastschiene (11) befestigt ist, auf welcher der erste Block (9) verschiebbar angeordnet ist.

5. Vorrichtung nach einem der Ansprüche 1 bis 4, dadurch gekennzeichnet, daß die Führungsbahnen (12,13) des ersten Blocks (9) einander kreuzen.

6. Vorrichtung nach einem der Ansprüche 1 bis 5, dadurch gekennzeichnet, daß die in entgegengesetzter Richtung weisenden offenen Enden der Führungsbahnen (12,13) des ersten Blocks (9) in zwei einander gegenüber liegenden Seitenflächen (15,16) desselben münden.
